**Europäisches Patentamt**

**European Patent Office**

**Office européen des brevets**

(19)

(11) Numéro de publication: **0 165 357**
**A1**

## (12) DEMANDE DE BREVET EUROPEEN

(21) Numéro de dépôt: **84401218.7**

(22) Date de dépôt: **14.06.84**

(51) Int. Cl.⁴: **C 02 F 1/46**
**C 25 B 9/00**

(43) Date de publication de la demande:
**27.12.85 Bulletin 85/52**

(84) Etats contractants désignés:
**AT BE CH DE FR GB IT LI LU NL SE**

(71) Demandeur: **E.I.F. ECOLOGIE**
**97 rue Pierre de Montreuil**
**F-93100 Montreuil(FR)**

(72) Inventeur: **Deutch, Richard**
**25, Rue Mirabeau**
**F-94300 Vincennes(FR)**

(74) Mandataire: **Laget, Jean-Loup et al,**
**Cabinet Pierre Loyer 18, Rue de Mogador**
**F-75009 Paris(FR)**

(54) **Cellule électrolytique pour le traitement d'effluents.**

(57) Cellule électrolytique pour le traitement d'effluents contenant des composés organiques, toxiques ou polluants.

Un empilement d'électrodes alternées en forme de disque 3 percé de trous 4 régulièrement répartis, est maintenu entre deux brides d'extrémité 9, 10 sollicitées l'une vers l'autre par des tirants 11.

*Fig:2*

- 1 -

## Cellule électrolytique pour le traitement d'effluents

L'invention concerne une cellule électrolytique pour le traitement d'effluents.

Il est bien connu de traiter les effluents par électrolyse pour en éliminer les composés toxiques ou polluants. Usuellement, ce traitement s'effectue dans des cellules électrolytiques à compartiments anodique et cathodique séparés. La paroi de séparation est poreuse et elle laisse passer certains ions qui assurent le passage du courant électrique, tout en retenant les produits des réactions électrochimiques formés dans les compartiments.

Un but de la présente invention est de s'affranchir de cette paroi de séparation entre compartiments anodique et cathodique, afin de réaliser une électrolyse directement dans un flux d'effluent à traiter. Un autre but de l'invention est de réaliser une cellule électrolytique préfabriquée, susceptible d'être insérée dans le circuit de circulation de l'effluent à traiter.

L'invention a pour objet une cellule électrolytique pour le traitement d'effluents, notamment d'effluents contenant des composés organiques, toxiques ou polluants, du type comprenant plusieurs électrodes alternées, respectivement anodes et cathodes, caractérisée en ce qu'elle est constituée d'un empilement d'électrodes alternées, séparées les unes des autres par des anneaux isolants, l'empilement étant maintenu en place par deux brides d'extrémité isolantes sollicitées l'une vers l'autre par des tirants; et en ce que les électrodes sont en forme de disques percés de trous régulièrement disposés.

Selon d'autres caractéristiques de l'invention :

- les électrodes portent une patte de fixation à la borne générale d'anode ou de cathode, cette patte étant déportée par rapport à un diamètre de l'électrode ;

- les trous de toutes les électrodes sont alignés pour éviter les pertes de charge ;

- les brides d'extrémité présentent chacune un tube axial susceptible d'être raccordé au circuit de l'effluent à traiter;

- le tube axial de chaque bride débouche sur la petite base d'une surface tronconique logée dans la bride et dont la grande base a un diamètre égal au diamètre intérieur des anneaux intercalaires ;

- le rapport de la surface totale des trous d'une électrode à la surface de la section intérieure du tube axial est compris entre 5 et 6.

D'autres caractéristiques de l'invention ressortiront de la description qui suit faite avec référence au dessin annexé sur lequel on peut voir :

Figure 1 - une vue partielle en coupe longitudinale d'un exemple de réalisation d'une cellule électrolytique pour le traitement d'effluents selon l'invention ;

Figure 2 - une vue partielle de bout avec arrachement de la cellule de la figure 1.

En se reportant au dessin, on voit que la cellule électrolytique selon l'invention est composée essentiellement par un empilement d'électrodes, respectivement anodes et cathodes, alternées et séparées par des anneaux 8 isolants et assurant l'étanchéité entre l'intérieur de la cellule et l'extérieur. Chaque électrode, anode 1 ou cathode 2, est constituée d'un disque 3 muni de trous réguliers 4 et d'une patte 5 dont le rôle est triple : elle sert à l'orientation correcte de l'électrode, à l'alimentation en courant électrique, et à la fixation de l'électrode sur le support d'électrode qui constitue la borne générale d'alimentation en courant électrique, respectivement anode 6 ou cathode 7. L'empilement des électrodes alternées et de leurs anneaux intercalaires est maintenu entre deux brides d'extrémités 9 et 10. Ces brides sont maintenues en position au moyen de quatre tirants tels que 11, qui sont des tiges d'acier filetées pour recevoir à chaque extrémité une rondelle 12 et un écrou 13. Le serrage des écrous permet de bloquer l'ensemble de façon à comprimer légèrement les anneaux 8 intercalaires afin d'assurer une liaison étanche sur tout le pourtour de la cellule.

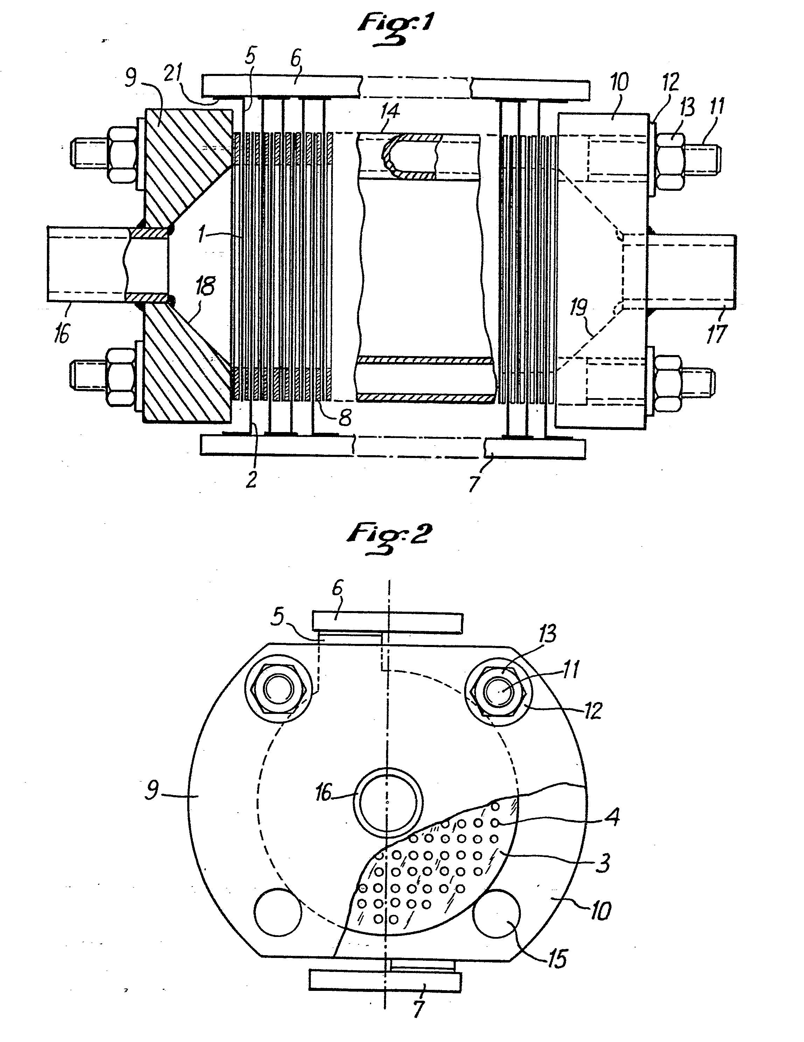

Les tirants 11 sont isolés électriquement du reste de la cellule au moyen de tubes en matière plastique 14 qui les gaînent sur toute leur longueur comprise entre les rondelles 12 de leurs deux extrémités. A cet effet, les brides 9 et 10 sont pourvues de perçages tels que 15. On peut voir sur la figure 2 que les perçages 15 sont disposés de telle sorte que les tubes 14 soient tangents à la périphérie des électrodes en disque 3. Cette disposition assure d'une part un encombrement réduit pour la cellule, d'autre part un calage des électrodes facilitant leur alignement et leur maintien en position.

Les brides d'extrémité 9, 10 portent chacune un tube axial 16, 17 de raccordement au circuit de l'effluent à traiter. Ce tube axial débouche sur la petite base d'une surface tronconique 18, 19 logée à l'intérieur de la bride 9, 10, et dont la grande base a un diamètre égal au diamètre intérieur des anneaux intercalaires 8, c'est-à-dire au diamètre maximal du volume cylindrique intérieur de la cellule susceptible de recevoir l'effluent à traiter.

Chaque électrode est constituée par un disque 3 muni de trous 4 régulièrement disposés, de façon que les trous de toutes les électrodes de l'empilement soient en regard les uns des autres, définissant ainsi des voies directes de passage s'étendant d'un bout à l'autre de l'empilement, ce qui réduit les pertes de charge au cours du trajet de l'effluent dans la cellule.

A titre d'exemple, pour une cellule dont le diamètre intérieur est de 92 mm, une électrode présente environ 125 trous d'un diamètre de 6 mm. Si l'on appelle S la surface totale de passage à travers une électrode, c'est-à-dire la surface totale des trous de cette électrode, et $s$ la surface de la section intérieure du tube 16 de raccordement au circuit de l'effluent à traiter, le rapport $S/s$ est de préférence compris entre 5 et 6.

Pour assurer l'orientation correcte des électrodes et leur alignement rigoureux, la patte 5 de fixation de l'électrode se trouve décalée par rapport à un axe de symétrie verticale 20. Cette patte présente une partie dans le plan du disque 3 et une partie repliée à 90°, ou rabat 21, qui vient se placer sous la borne générale d'alimentation 6 ou 7 pour y être fixée. Ce rabat 21 est assez encombrant pour qu'il soit préférable de disposer les anodes avec leur patte alternativement à gauche et à droite de l'axe 20. Ainsi, une anode sur deux a sa patte 5 à gauche de l'axe 20 et son rabat 21 dirigé vers la gauche sur la figure 1, et l'autre anode a sa patte 5 à droite de l'axe 20 et son rabat 21 dirigé vers la droite sur cette même figure 1.

Dans l'exemple représenté, les anodes ont toutes leur patte dirigée vers le haut sur la figure 2. La disposition est symétrique pour ce qui concerne les cathodes qui ont toutes leurs pattes dirigées vers le bas sur la même figure 2.

Alors que les anneaux 8 intercalaires, les tubes 14 et les brides 9, 10 sont en matière plastique, notamment en P.V.C. les électrodes sont en métal, de préférence en titane. Ce titane, en fonction de l'agressivité de la composition chimique de l'effluent à traiter est de préférence muni d'un revêtement de surface. Ce revêtement est constitué par exemple de platine, de carbone vitreux, de silicium, ou de ferrite frittée.

Le traitement des effluents par électrolyse dans la cellule électrolytique selon l'invention consiste essentiellement à éliminer dans les effluents les composés toxiques ou polluants. Cette élimination peut être partielle, afin de rendre l'effluent rejetable ou réutilisable. Elle peut être totale si l'on doit détruire des matières organiques contenues dans l'effluent. Ces matières organiques peuvent être par exemple des bactéries, des virus, des sporules, ou des levures. Elles peuvent être, plus simplement, des phénols, des crésols, des fongicides, des pesticides, des herbicides, des cyanures, des produits organo-chlorés, des antibiotiques, des sulfamides, des acides organiques, des amines, des détergents, des hydrocarbures simples ou substitués, des chaînes cycliques, ou aromatiques, ou aliphatiques, des colorants, ou des mélanges organo-minéraux.

Les effluents susceptibles de contenir ces produits se trouvent dans l'industrie pétrochimiques, dans l'industrie chimique (azurants optiques, fongicides, pesticides, herbicides, produits lessiviels ), dans l'industrie des poudres (effluents de poudrerie, picrates, picramates) dans l'industrie agroalimentaire (bactéries des saumures, éléments organiques des solutions d'acide en vue du ré-emploi de ces solutions), dans l'industrie pharmaceutique (sulfamides, antibiotiques), ou dans l'industrie des cosmétiques par exemple. Ces effluents correspondent notamment à des eaux de rinçage susceptibles d'être réutilisées.

Le traitement électrolytique appliqué aux effluents, grâce à la cellule selon l'invention, s'analyse comme assurant une diminution sensible de la demande chimique en oxygène (D C O). Il est donc lié à la dissolution de l'oxygène dans le milieu à traiter. Comme cette dissolution décroît lorsque la température augmente, il est préférable de rester dans une gamme de températures inférieures à 40°C, et de refroidir l'effluent en dessous de cette température avant de le faire passer dans la cellule.

En fonction du degré de toxicité ou de pollution de l'effluent on peut faire passer l'effluent dans la cellule avec un débit allant de quelques litres à l'heure à quelques dizaines de métres cubes à l'heure. Pour certains effluents, il est préférable de réaliser plusieurs passages successifs dans la cellule pour faire baisser la D C O de quelques milliers à quelques unités.

A titre d'exemple particulier de réalisation, les électrodes, toutes identiques, en platine recouvert de ferrite frittée, ont un diamètre extérieur de 120 mm, présentent 123 trous de 6mm de diamètre, et ont une épaisseur d'environ 1,5mm. Les anneaux intercalaires en PVC, ont un diamètre extérieur de 120mm, un diamètre intérieur de 92mm et une épaisseur de 3mm. Les brides en PVC, ont un diamètre extérieur de 180mm une épaisseur de 40mm, et un passage central (tube 16) de diamètre intérieur égal à 26mm. La surface conique prévue dans chaque bride a un angle d'ouverture de 90° et une grande base d'un diamètre de 92mm. Dans le cas de 50 anodes et de 50 cathodes alternées, l'ensemble de la cellule a une dimension extérieure de 600mm. Cette cellule admet une densité de courant électrique inférieure à 3.000 A/m² sous une tension allant de 1 à 20V environ en fonction de l'effluent traité.

La réaction d'oxydation des matières organiques peut être améliorée au niveau de la conductivité par l'adjonction de chlorures à l'effluent, ou au niveau de l'oxydation par l'adjonctio de catalyseurs d'oxydation du type oxydes métalliques.

Dans les exemples de réalisation préférés de l'invention, les électrodes sont en titane ; en titane platiné ; en titane recouvert d'un ou plusieurs des matériaux du groupe comprenant le platine, l'iridium, le tantale et l'oxyde de titane ; en titane recouvert de ferrite ; ou en ferrite.

REVENDICATIONS

1. - Cellule électrolytique pour le traitement d'effluents, notamment d'effluents contenant des composés organiques, toxiques ou polluants, du type comprenant plusieurs électrodes alternées, respectivement anodes et cathodes, caractérisée en ce qu'elle est constituée d'un empilement d'électrodes (1, 2) alternées, séparées les unes des autres par des anneaux (8) isolants, l'empilement étant maintenu en place par deus brides d'extrémité isolantes (9, 10) sollicitées l'une vers l'autre par des tirants (11) ; et en ce que les électrodes sont en forme de disques (3) percés de trous (4) régulièrement disposés.

2. - Cellule selon la revendication 1, caractérisée en ce que les électrodes (1, 2) portent une patte (5) de fixation à la borne générale d'anode (6) ou de cathode (7), cette patte étant déportée par rapport à un diamètre de l'électrode.

3. - Cellule selon la revendication 1, caractérisée en ce que les trous (4) de toutes les électrodes sont alignés pour éviter les pertes de charge.

4. - Cellule selon la revendication 1, caracrérisée en ce que les brides d'extrémité (9, 10) présentent chacune un tube axial (16, 17) susceptible d'être raccordé au circuit de l'effluent à traiter.

5. - Cellule selon la revendication 4, caractérisée en ce que le tube axial (16, 17) de chaque bride débouche sur la petite base d'une surface tronconique (18, 19) logée dans la bride (9, 10) et dont la grande base a un diamètre égal au diamètre intérieur des anneaux intercalaires (8).

6. - Cellule selon l'ensemble des revendications 3 et 5, caractérisée en ce que le rapport de la surface totale des trous (4) d'une électrode à la surface de la section intérieure du tube axial (16, 17) est compris entre 5 et 6.

Fig.1

Fig.2

0165357

1/1

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 900 377 (K. ENNS et al.) * colonne 7, ligne 63 - colonne 8, ligne 53; colonne 9, ligne 48 - colonne 10, ligne 41 * | 1,4,6 | C 02 F 1/46 C 25 B 9/00 |
| | --- | | |
| A | EP-A-0 071 443 (DIAMOND SHAMROCK) * page 28, revendication 1; figure 1 * | 1,3,4 | |
| | --- | | |
| A | DE-A-2 719 427 (E. PACKER) * page 8, alinéa 3; figures 2,5 * | 2 | |
| | --- | | |
| A | FR-A-2 224 207 (SAINT-GOBAIN TECHNIQUES NOUVELLES) * page 5, revendications 4,5; figure 1 * | 1,3 | |
| | ----- | | |

**DOMAINES TECHNIQUES RECHERCHES (Int. Cl.4)**

C 02 F
C 25 B

Le présent rapport de recherche a été établi pour toutes les revendications

| Lieu de la recherche LA HAYE | Date d'achèvement de la recherche 11-02-1985 | Examinateur TEPLY J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82